(19) **Europäisches Patentamt / European Patent Office / Office européen des brevets**

(11) **EP 4 430 364 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(21) Anmeldenummer: **22800712.6**

(22) Anmeldetag: **02.11.2022**

(51) Internationale Patentklassifikation (IPC):
**G01F 1/66** (2022.01)       **G01F 1/667** (2022.01)
**G01F 15/02** (2006.01)

(52) Gemeinsame Patentklassifikation (CPC):
**G01F 1/662; G01F 1/667; G01F 1/668; G01F 15/024**

(86) Internationale Anmeldenummer:
**PCT/EP2022/080599**

(87) Internationale Veröffentlichungsnummer:
**WO 2023/083668 (19.05.2023 Gazette 2023/20)**

(54) **VERFAHREN ZUM BETRIEB EINES ULTRASCHALL-FLUIDZÄHLERS SOWIE ULTRASCHALL-FLUIDZÄHLER**

METHOD OF OPERARTING AN ULTRASONIC FLOWMETER AND ULTRASONIC FLOWMETER

PROCÉDÉ DE FONCTIONNEMENT D'UN DÉBITMÈTRE À ULTRASONS ET DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.11.2021   DE 102021129096**

(43) Veröffentlichungstag der Anmeldung:
**18.09.2024   Patentblatt 2024/38**

(73) Patentinhaber: **Diehl Metering GmbH**
**91522 Ansbach (DE)**

(72) Erfinder:
• **MADINGER, Andreas**
**91522 Ansbach (DE)**

• **HERRMANN, Florian**
**91550 Dinkelsbühl (DE)**
• **WOLF, Philip**
**91522 Ansbach (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
EP-A1- 1 243 901          DE-A1- 10 062 875
DE-A1- 102012 022 376     DE-U1- 202020 003 345
GB-A- 2 146 122           US-A1- 2008 066 557

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft zum einen ein Verfahren zum Betrieb eines Ultraschall-Fluidzählers gemäß dem Oberbegriff des Anspruchs 1 sowie zum anderen einen Ultraschall-Fluidzähler gemäß dem Oberbegriff des Anspruchs 14.

### Technologischer Hintergrund

Ultraschall-Fluidzähler dienen dazu, den Durchfluss an Fluid in einem Fluidleitungsnetz, beispielsweise einem Wasserleitungsnetz, zu bestimmen. In einem Fluidleitungsnetz steht das Fluid unter Druck. Eine Durchflussmessung bzw. Fluidvolumenstrommessung erfolgt auf Basis einer Messung der Laufzeit eines das Fluid durchschallenden Ultraschallsignals. Die Messung der Laufzeit erfolgt hierbei einmal mit und einmal gegen die Strömungsrichtung. Aus der Laufzeitdifferenz kann der Fluiddurchfluss bzw. Fluidvolumenstrom ermittelt werden. Ultraschall-Fluidzähler werden üblicherweise von einer Batterie mit elektrischer Energie versorgt. Die Batteriekapazität einer solchen Batterie deckt die komplette Lebensdauer des Ultraschall-Fluidzählers im Feld ab. Die Lebensdauer eines Ultraschall-Fluidzählers liegt üblicherweise in einem Bereich von 12 bis 16 Jahren. Da jede Messung Energie benötigt, ist es aufgrund der begrenzten Batteriekapazität erforderlich, die Messrate bzw. das Messintervall, also den zeitlichen Abstand zweier benachbarter Messpunkte, so einzustellen, dass die Lebensdauer erreicht wird. Der Fluiddurchfluss wird üblicherweise in festen Zeitabständen, also mit konstanter Messrate, gemessen und das jeweils zum diskreten Messzeitpunkt gezählte Volumen zwischen den Messzeitpunkten interpoliert. Bei einem statischen Durchflussprofil ist dies nicht sonderlich schädlich, da dieses nur einen geringen Einfluss auf das Volumenergebnis hat. Allerdings führt das Verfahren bei einem dynamischen Durchflussprofil zu Ungenauigkeiten, da Durchflussänderungen zu spät erkannt werden. Es gibt daher ein Spannungsfeld zwischen der begrenzten Batteriekapazität eines Ultraschall-Fluidzählers auf der einen Seite und dem Erfordernis einer möglichst genauen, auch dynamische Durchflussprofile abbildenden Volumenstrommessung auf der anderen Seite.

### Druckschriftlicher Stand der Technik

Aus der EP 3 199 932 A1 ist ein batteriebetriebener Verbrauchszähler zur Erfassung des Energieverbrauchs eines zu einem Kunden geleiteten Fluids bekannt, welcher eine Durchflussmesseinrichtung zur Messung des Durchflusses sowie eine Temperaturmesseinrichtung zur Messung der Einlauf- sowie Auslauftemperaturen umfasst. Ändert sich bei diesem Durchflusszähler der Durchfluss, wird die Messrate der Temperaturmessungen erhöht. Hierdurch kann eine verzögerte Fluidtemperaturänderung, verbunden mit einer Änderung der Durchflussrate, genauer erfasst werden und als Folge davon die verbrauchte Energie genauer gemessen werden.

Aus der DE 10 2012 022 376 ist ein Verfahren zur Bestimmung des Drucks eines Fluids in einem Behälter bekannt, wobei mittels einer akustischen Welle in dem Fluid eine von dem Druck des Fluids beeinflusste Eigenschaft des Fluids oder eines mit dem Druck des Fluids beaufschlagten Elements in dem Behälter ermittelt wird und wobei aus der ermittelten Eigenschaft der Druck bestimmt wird. Mittels der akustischen Welle in dem Fluid wird zusätzlich eine Durchflussgeschwindigkeit des Fluids durch den Behälter bestimmt. Eine Messeinrichtung zur Messung des Drucks und der Durchflussgeschwindigkeit des Fluids in dem Behälter weist zwei kombinierte Ultraschall-Sende-/Empfangseinheiten sowie eine Recheneinheit auf, die programmtechnisch zur Durchführung des Verfahrens eingerichtet ist. Die zwei Ultraschall-Sende-/Empfangseinheiten sind an einem Rohr als Behälter für das Fluid angeordnet, um den Druck des Fluids in dem Rohr zu messen, und sind jeweils dafür eingerichtet, eine akustische Welle in dem Fluid zu erzeugen und auch zu empfangen.

### Aufgabe der vorliegenden Erfindung

Die Aufgabe der vorliegenden Erfindung besteht darin, ein Verfahren zum Betrieb eines Ultraschall-Fluidzählers bzw. einen Ultraschall-Fluidzähler zur Verfügung zu stellen, welches bzw. welcher eine höhere Messgenauigkeit bei energieschonendem Betrieb ermöglicht.

### Lösung der Aufgabe

Die vorstehende Aufgabe wird bei dem gattungsgemäßen Verfahren durch die Merkmale des Anspruchs 1 gelöst. Zweckmäßige Ausgestaltungen des erfindungsgemäßen Verfahrens werden in den zugehörigen abhängigen Ansprüchen beansprucht.

Erfindungsgemäß wird die durch ein Durchflussereignis auf den Ultraschallwandler, also auf die Piezokeramik, über das Fluid ausgeübte hydraulische Kraft oder hydraulische Kraftänderung vom Ultraschallwandler detektiert, in der Auswerteelektronik ausgewertet und als Folge davon die Messrate, also der zeitliche Abstand benachbarter Messpunkte, für die Ermittlung des Durchflussvolumens an Fluid adaptiv verändert. Hierdurch wird es möglich, dynamische Durchflussbedingungen wesentlich genauer zu erfassen. Darüber hinaus ermöglicht das erfindungsgemäße Verfahren, zu Zeiten statischer Durchflussbedingungen, z.B. zu Zeiten, wenn kein Fluid entnommen wird, die Messrate im Vergleich zu dem herkömmlichen Verfahren zu reduzieren. Infolgedessen kann trotz einer erhöhten Messgenauigkeit bei dynamischen Durchflussbedingungen sogar ein energiesparender Betrieb gewährleistet und damit sogar eine Erhöhung der Batterielebensdauer erreicht werden. Gleichzeitig kann die hydraulische Kraft oder hydraulische Kraftänderung von dem ohnehin an einem Ultraschall-Fluidzähler vorhandenen Ultraschallwandler erfasst werden. Es muss keine zusätzliche Sensorik zum Einsatz kommen. Hierdurch kann das Verfahren besonders kostengünstig und effizient umgesetzt werden, da lediglich die Auswerteelektronik bzw. die diesbezügliche Betriebssoftware entsprechend angepasst werden muss. Alternativ oder zusätzlich ist erfindungsgemäß vorgesehen, dass das über ein Messintervall ermittelte Durchflussvolumen auf Basis der zeitlichen Lage des Durchflussereignisses in Relation zum Messintervall korrigiert wird. Dies ermöglicht es, eine Durchflussänderung innerhalb des Messintervalls zu erkennen und eine genaue zeitliche Zuordnung zu treffen, wann in dem Messintervall z.B. die Fluidentnahme begonnen hat. Hierdurch lässt sich zusätzlich die Messgenauigkeit erhöhen.

Zweckmäßigerweise wird die durch das Durchflussereignis am Ultraschallwandler über das Fluid ausgeübte hydraulische Kraft oder hydraulische Kraftänderung als sich am Ultraschallwandler bzw. der Piezokeramik einstellende elektrische Spannung oder als sich am Ultraschallwandler (bzw. Piezokeramik) einstellende Änderung der elektrischen Spannung detektiert. Die Kraftänderungen am Piezokristall des Ultraschallwandlers führen zu einer Änderung der elektrischen Spannung am Ultraschallwandler und können so detektiert werden.

Das erfindungsgemäße Verfahren ermöglicht es auch, die Richtung der Kraftänderung festzustellen, indem detektiert wird, ob die sich am Ultraschallwandler einstellende Änderung der elektrischen Spannung positiv oder negativ ist, also ob sie steigt oder sinkt. Wird beispielsweise ein Absperrhahn in dem Fluidleitungsnetz geschlossen, führt dies zu einer Druckerhöhung, d.h. zu einer positiven Änderung der elektrischen Spannung. Wird beispielsweise ein Absperrhahn geöffnet, führt dies zu einer Druckminderung und somit zu einer sich am Ultraschallwandler einstellenden negativen Änderung der elektrischen Spannung. Somit kann durch das erfindungsgemäße Verfahren z.B. festgestellt werden, dass ein Absperrhahn geschlossen und/oder geöffnet worden ist.

Vorzugsweise ermöglicht das erfindungsgemäße Verfahren auch, den Spannungsverlauf, der sich bei einer Kraftänderung einstellt, auszuwerten. Dies wird insbesondere durch eine dauerhafte Beobachtung des Spannungsverlaufs an der Piezokeramik ermöglicht. Aus dem Spannungsverlauf kann auf die Art des die hydraulische Kraftänderung verursachenden Ereignisses geschlossen werden.

Das Verfahren ermöglicht es auch, dass die Auswerteelektronik des Ultraschall-Fluidzählers abhängig von der Kraftänderung, vorzugsweise von der festgestellten Richtung der Kraftänderung, parametrisiert werden kann. Wird beispielsweise eine positive Kraftänderung detektiert (weil der Absperrhahn geschlossen worden ist), kann dies in der Auswerteelektronik als Parameter für ein Umschalten auf eine niedrige Messrate vorgenommen werden. Demgegenüber kann bei der Detektion einer negativen Kraftänderung (Öffnen eines Absperrhahns) die negative Kraftänderung bzw. die daraus resultierende Spannungsänderung als Parameter in der Auswerteelektronik festgelegt sein, um die Messrate zu erhöhen.

Bei dem Durchflussereignis kann es sich zweckmäßig um die Betätigung eines Absperrhahns und/oder eines Ventils, vorzugsweise um das vollständige oder teilweise Schließen oder um das vollständige oder teilweise Öffnen eines Absperrhahns und/oder des Ventils, und/oder um eine Pumpenaktivität handeln.

Gemäß einer weiteren Ausgestaltung der vorliegenden Erfindung kann eine hydraulische Kraft oder hydraulische Kraftänderung jeweils als Vergleichswert vorzugsweise in dem Ultraschall-Fluidzähler oder Ultraschall-Zähler-zugeordnet, vorzugsweise in einem Head-End, hinterlegt sein und von der Auswerteelektronik mit während des Betriebs des Ultraschall-Fluidzählers generierten Messwerten verglichen werden. Bei dem Head-End handelt es sich z. B. um einen Logikknoten oder eine zentrale Datenverwaltung.

Beispielsweise ist eine erste sowie eine zweite Messrate vorgesehen, wobei bei der zweiten Messrate das Messintervall größer ist als bei der ersten Messrate und abhängig von der detektierten hydraulischen Kraft oder hydraulischen Kraftänderung eine Umschaltung von der ersten auf die zweite Messrate oder umgekehrt erfolgt.

Hierbei kann vorgesehen sein, dass die zweite Messrate deutlich größer als eine bisher herkömmliche Messrate und die erste Messrate deutlich kleiner als die bisher übliche Messrate ist. Dies ist besonders vorteilhaft, da zu Zeiten statischer Durchflussbedingungen die Messrate wesentlich kleiner als bisher ausgestaltet sein kann, wodurch die Batterie des Ultraschall-Fluidzählers geschont wird.

Zweckmäßigerweise ist nach der Detektion eines Durchflussereignisses eine zur ersten sowie zweiten Messrate ungleiche dritte Messrate vorgesehen. Die dritte Messrate umfasst insbesondere Messbursts, d. h. mehrere Messungen, welche in einem kurzen Zeitintervall durchgeführt werden. Vorzugsweise werden bei der dritten Messrate nur eine vorab begrenzte Anzahl an Messungen und/oder diese in einem begrenzten Zeitintervall, z. B. in einem Zeitintervall im Sekundenbereich, vorgenommen. Mit der dritten Messrate kann eine Änderung des Durchflussvolumens besonders präzise ermittelt werden.

Vorteilhafterweise ist die dritte Messrate höher als die erste Messrate und/oder die zweite Messrate.

Zweckmäßigerweise erfolgt nach den Messungen mit der dritten Messrate in Abhängigkeit von der detektierten hydraulischen Kraft oder hydraulischen Kraftänderung eine Umschaltung auf die erste Messrate oder auf die zweite Messrate. Da die dritte Messrate einen hohen Energiebedarf hat, kann durch die Umschaltung auf die erste Messrate oder zweite Messrate Energie gespart werden.

Gemäß einer zweckmäßigen Ausgestaltung kann im Rahmen der adaptiven Änderung der Messrate für die Ermittlung des Durchflussvolumens an Fluid das Messintervall algorithmisch adaptiert werden. Hierdurch kann die Durchflussmessung zusätzlich an die tatsächlichen Gegebenheiten der dynamischen Durchflussbedingungen adaptiert werden.

In dem erfindungsgemäßen Verfahren können vorzugsweise zusätzlich folgende Daten generiert werden:

- Die Häufigkeit von Durchflussereignissen und/oder
- der Zeitpunkt von Durchflussereignissen und/oder
- der zeitliche Verlauf von Durchflussereignissen und/oder
- der zeitliche Abstand von, vorzugsweise benachbarten, Durchflussereignissen.

Mindestens eine der vorgenannten Größen kann jeweils als Eingangsgröße für den Algorithmus verwendet werden.

Zweckmäßigerweise wird das Durchflussvolumen zwischen den Messungen interpoliert. Trotz dieser Interpolation wird aufgrund der Änderung der Messrate in Abhängigkeit von den erfassten Durchflussereignissen eine wesentlich höhere Genauigkeit erreicht.

Durch die Erfassung eines Durchflussereignisses innerhalb eines Messintervalls kann vorzugsweise die Interpolation in Abhängigkeit der zeitlichen Lage des Durchflussereignisses innerhalb des Messintervalls erfolgen.

Ferner kann vorgesehen sein, dass bei der Festlegung der Veränderung der Messrate die noch vorhandene Restkapazität der Batterie des Ultraschall-Fluidzählers mitberücksichtigt wird und zwar vorzugsweise dergestalt, dass der Ultraschall-Fluidzähler seine Messrate derart adaptiert, dass er noch bis zu einer fest vorgegebenen Gesamtbetriebsdauer (z.B. 12 Jahre) weiter betrieben werden kann. Dies kann bei einer vergleichsweise niedrigen Restkapazität der Batterie unter "normalen Betriebsbedingungen" zu einem verfrühten Ende der Lebensdauer führen, was jedoch durch die vorbeschriebene Maßnahme verhindert werden kann.

Die vorliegende Erfindung betrifft darüber hinaus einen Ultraschall-Fluidzähler, vorzugsweise Ultraschall-Wasserzähler, gemäß dem Oberbegriff des Anspruchs 14. Erfindungsgemäß wird der Ultraschall-Fluidzähler bzw. dessen Elektronikmodul nach einem Verfahren gemäß mindestens einem der Ansprüche 1 bis 13 betrieben.

Beschreibung der Erfindung anhand von Ausführungsbeispielen

Nachstehend werden zweckmäßige Ausführungsbeispiele der Erfindung anhand von Zeichnungsfiguren näher erläutert. Wiederkehrende Merkmale sind der Übersichtlichkeit halber lediglich einmal mit einem Bezugszeichen gekennzeichnet. Es zeigen:

Fig. 1  eine vereinfachte Prinzipdarstellung eines Ultraschall-Fluidzählers in Schnittdarstellung zur Anwendung des erfindungsgemäßen Verfahrens;

Fig. 2  ein Blockschaltbild eines Beispiels des Aufbaus des Elektronikmoduls eines Ultraschall-Fluidzählers;

Fig. 3  ein Blockschaltbild eines beispielhaften Verfahrensablaufs;

Fig. 4  ein Beispiel eines Spannung/Zeit-Diagramms zur Darstellung der Änderung des hydraulischen Drucks beim Schließen eines Absperrhahns bzw. Öffnen eines Absperrhahns;

Fig. 5  ein erstes Beispiel einer Veränderung der Messrate in Abhängigkeit der Zeit;

Fig. 6  ein zweites Beispiel einer Veränderung der Messrate in Abhängigkeit der Zeit;

Fig. 7  ein drittes Beispiel einer Veränderung der Messrate in Abhängigkeit der Zeit;

Fig. 8  ein Durchfluss/Zeit-Diagramm zur Darstellung von dynamischen Durchflussbedingungen; sowie

Fig. 9  ein Volumenstrom/Zeit-Diagramm zur Feststellung des Durchflussereignisses in Relation zum Messintervall.

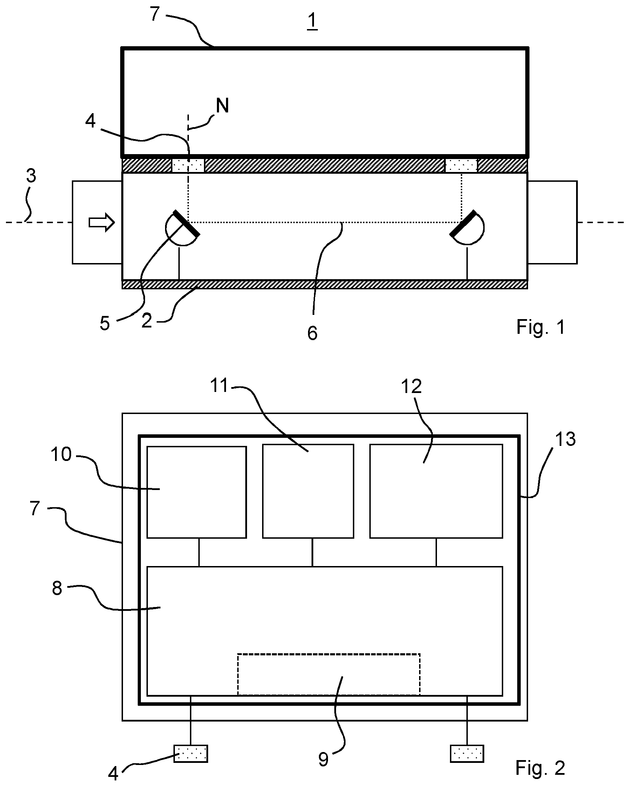

Ein Ultraschall-Fluidzähler 1, z.B. ein Wasserzähler, besitzt ein Gehäuse, z.B. ein Messrohrgehäuse 2, welches in ein Fluidleitungsnetz 3, z.B. eine Versorgungsleitung für Kalt- oder Warmwasser, installiert wird. Der Ultraschall-Fluidzähler 1 verfügt beispielsweise über zwei Ultraschallwandler 4, von denen der eine Ultraschallwandler näher zum Einlass (siehe Pfeil in Fig. 1) als der weitere Ultraschallwandler angeordnet ist. Die Ultraschallwandler 4 befinden sich beispielsweise in einer Bohrung der Wandung des Messrohrgehäuses 2 und sind mit ihrer jeweiligen Flächennormale N senkrecht zur Fließrichtung des Fluids innerhalb des Messrohrgehäuses 2 orientiert.

Jeder Ultraschallwandler 4 umfasst ein piezoelektrisches Element in Form eines Piezokeramikplättchens, welches beidseitig entlang seiner Hauptflächen mit (in Fig. 1 nicht dargestellten) Elektroden versehen ist, die in einem Elektronikmodul 7 verdrahtet sind, welches sich an der Oberseite des Messrohrgehäuses 2 befindet. Das piezokeramische Plättchen kann hierbei unmittelbar dem Fluid ausgesetzt sein oder alternativ mit einer sehr dünnen Schutzschicht überzogen sein, die die hydraulische Kraft auf das piezokeramische Plättchen überträgt.

Innerhalb des Messrohrgehäuses 2 befinden sich zwei Reflektoren 5, die dazu vorgesehen sind, ein vom Ultraschallwandler 4 versendetes Ultraschallsignal (Ultraschallburst) jeweils in Längsrichtung des Messrohrgehäuses 2 umzulenken bzw. jeweils aus der Längsrichtung des Messrohrgehäuses 2 wieder zum empfangenden Ultraschallwandler hin abzulenken. Die Messstrecke 6 des in Fig. 1 gezeigten Beispiels des Ultraschall-Fluidzählers ist U-förmig. Sie kann aber auch andere Formen wie z. B. W-Form oder Doppel-W-Form besitzen, bei der jeweils mehr als zwei Umlenkungen stattfinden bzw. mehr Reflektoren 5 vorgesehen sind. Durch Versenden von Ultraschallsignalen sowohl in als auch entgegen der Fließrichtung kann, sofern das Fluid das Messrohrgehäuse 2 durchströmt, anhand der hierdurch begründeten Laufzeitdifferenz des Ultraschallsignals in Strömungsrichtung sowie entgegen der Strömungsrichtung auf das Durchflussvolumen geschlossen werden.

Fig. 2 zeigt in stark vereinfachter schematischer Darstellungsweise die wesentlichen Funktionselemente des Elektronikmoduls 7 eines Ultraschall-Fluidzählers 1. Das Elektronikmodul 7 umfasst eine Platine 13 mit einem Mikroprozessor 8 mit einem Speicher 9. Ferner ist eine Batterie 10 vorgesehen, die die Lebensdauer des Ultraschall-Fluidzählers im Feld sicherstellt. Derartige Ultraschall-Fluidzähler sind für eine Lebensdauer von mindestens 12 Jahren ausgelegt, sodass die Batterie 10 die Funktion des Ultraschall-Fluidzählers 1 über diesen langen Zeitbereich sicherstellen muss. Des Weiteren kann sich an dem Ultraschall-Fluidzähler ein Display 12 befinden. Die von dem Ultraschall-Fluidzähler erzeugten Daten werden über eine Datenschnittstelle 11 ausgegeben. Hierbei handelt es sich in der Regel um eine Funkschnittstelle, die es ermöglicht, Verbrauchsdaten und/oder weitere Betriebsdaten an einen externen (nicht dargestellten) Datensammler zu übertragen und/oder von dem Datensammler versendete Daten zu empfangen. Der Datensammler kann entweder fest positioniert oder mobil sein. Die Daten des Ultraschall-Fluidzählers 1 werden üblicherweise vom Datensammler weiter an ein (ebenfalls nicht dargestelltes) Head-End übertragen. Im Head-End erfolgt die Auswertung der Daten.

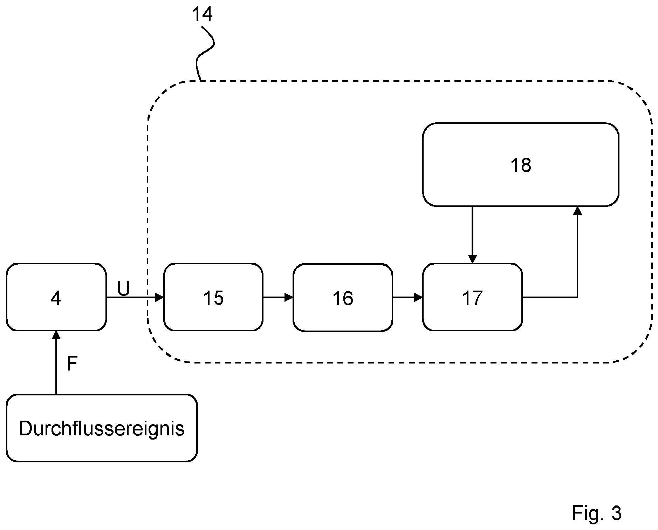

Erfindungsgemäß wird die Messrate der Durchflussmessung anhand von detektierten Änderungen der Durchflussbedingungen im Ultraschall-Fluidzähler 1 bzw. dessen Messrohrgehäuse 2 adaptiv angepasst, wie das Blockschaltbild der Fig. 3 beispielsweise zeigt. Die Änderungen der Durchflussbedingungen werden hierbei mittels der Ultraschallwandler 4 detektiert und zwar in Form einer mechanischen Kraft bzw. Kraftänderung bzw. hydraulischen Kraft bzw. hydraulischen Kraftänderung, die aufgrund der jeweils sich ändernden Durchflussbedingungen sich am Ultraschallwandler 4 einstellt.

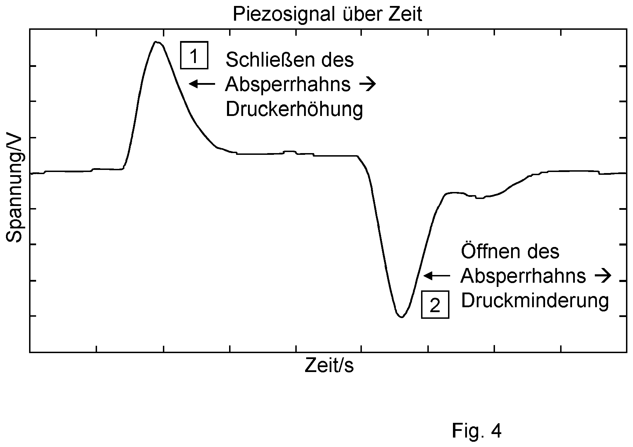

Fig. 4 zeigt als Beispiel eine Änderung der am Ultraschallwandler 4 gemessenen Spannung V in Abhängigkeit der Zeit S beim Schließen eines Absperrhahns, wodurch sich eine Druckerhöhung, also positive Spannungsänderung bzw. Spannungserhöhung, am Ultraschallwandler 4 einstellt, sowie beim anschließenden Öffnen des Absperrhahns, bei dem sich eine Druckminderung, also eine negative Spannungsänderung bzw. Spannungsreduzierung, am Ultraschallwandler 4 einstellt. Derartige Kraftänderungen werden über die Ultraschallwandler 4 erfasst und zur adaptiven Anpassung der Messrate verwendet. Die Grundlage des genutzten Messeffekts bildet die Eigenschaft von piezoelektrischen Keramiken, eine mechanische Spannung in eine elektrische Spannung umsetzen zu können. Wirkt eine mechanische Kraft, in dem vorliegenden Fall eine durch ein Durchflussereignis ausgelöste Kraftänderung, auf den piezokeramischen Ultraschallwandler 4, wird eine Ladung Q frei, die abhängig ist von der relevanten Wandlerfläche A und dem piezoelektrischen Ladungskoeffizienten $d_{33}$. Die Abhängigkeit ist wie folgt:

$$Q(F) = d_{33} \cdot F \qquad (1)$$

Die frei gewordene Ladung wird in der internen Kapazität $C_0$ des Ultraschallwandlers 4 gespeichert und kann in Form einer Spannung U gemessen werden:

$$U = \frac{Q(F)}{C_0} = \frac{d_{33} \cdot F}{C_0} \qquad (2)$$

Die vorliegende Erfindung nutzt diese Eigenschaft, da jeder Ultraschall-Fluidzähler bereits mindestens einen piezokeramischen Ultraschallwandler 4 besitzt. Es ist daher keine zusätzliche Sensorik notwendig, wodurch das Verfahren kostengünstig und effizient umgesetzt werden kann. Der Ultraschallwandler 4 ist bei einem Ultraschall-Fluidzähler 1 nahe oder direkt an der Fluiddurchflussströmung positioniert. Dies wird ausgenutzt, indem Kraftänderungen am piezokeramischen Plättchen des Ultraschallwandlers 4 zu einer Änderung der elektrischen Spannung am piezokeramischen Plättchen führen und so detektiert werden können. Es kann somit beispielsweise das Schließen eines Absperrhahns durch eine Spannungserhöhung bzw. das Öffnen eines Absperrhahns durch eine Spannungsreduzierung gem. Fig. 4 detektiert werden.

Die detektierte Spannungsänderung oder Spannung U wird einer Auswertung 14 zugeführt, vgl. Fig. 3. Mittels eines Verstärkers 15 wird die Spannungsänderung oder die Spannung U verstärkt und anschließend mittels eines Filters 16, z. B. eines Tiefpasses, gefiltert. Hierdurch werden Störsignale aus der Spannungsänderung oder der Spannung U herausgefiltert. Im Anschluss daran wird die Spannungsänderung oder die Spannung U einem Vergleichskomparator 17 zugeführt, welcher diese bzw. dieses mit einem Referenzwert vergleicht. Der Referenzwert ist in einem Head-End 18 gespeichert und wird von diesem an den Vergleichskomparator 17 übertragen. Alternativ kann der Referenzwert auch unmittelbar im Vergleichskomparator 17 hinterlegt sein. Übersteigt die Spannungsänderung oder der Spannung U den Referenzwert, detektiert der Vergleichskomparator 17 ein Durchflussereignis, welches er an das Head-End 18 meldet. Das Head-End 18 passt daraufhin die Messrate der Durchflussmessung an.

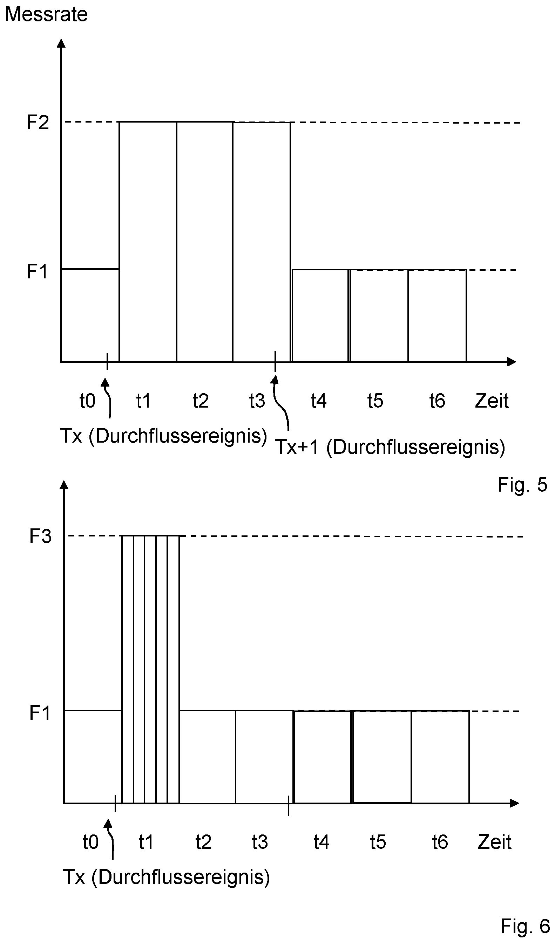

Hierbei kann beispielsweise nach einem Öffnen des Absperrhahns (z. B. Durchflussereignis Tx in Fig. 5) von einer niedrigen Messrate F1 auf eine erhöhte Messrate F2 umgeschaltet werden. Bei einem Schließen des Absperrhahns (z. B. Durchflussereignis Tx+1) kann dann z.B. von der erhöhten Messrate F2 wieder auf die reduzierte Messrate F1 zurückgeschaltet werden. Die Messrate F2 bedeutet beispielsweise, dass statt einer Durchflussmessung (Messrate F1) drei Durchflussmessungen an einem ansonsten festen Zeitintervall durchgeführt werden.

Zudem kann eine dritte Messrate F3 vorgesehen sein, vgl. Fig. 6. Hierbei wird nach der Detektion eines Durchflussereignisses Tx von der Messrate F1 auf die Messrate F3 umgeschaltet. Zudem ist nach der Detektion eines Durchflussereignisses eine (in den Figuren nicht dargestellte) Umschaltung von der Messrate F2 in die Messrate F3 möglich. Die Messrate F3 umfasst mehrere Messbursts, also mehrere Messungen in einem im Vergleich zu der ersten Messrate F1 sowie zu der zweiten Messrate F2 kürzeren Zeitintervall, z. B einem Zeitintervall im Sekundenbereich. Hierdurch kann eine Durchflussänderung besonders genau ermittelt werden. Nachdem eine bestimmte bzw. vorher festgelegte Anzahl an Messungen durchgeführt wurde und/oder das vorab definierte Zeitintervall abgelaufen ist, wird von der dritten Messrate F3 auf die Messrate F1 umgeschaltet. Alternativ kann von der Messrate F3 auch in die Messrate F2 umgeschaltet werden.

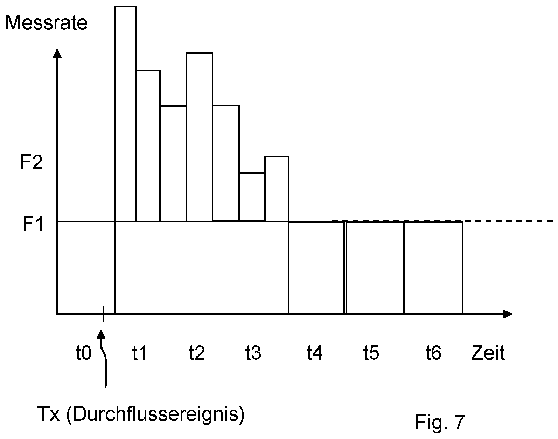

Alternativ kann, wie in Fig. 7 schematisch dargestellt, die Messrate beispielsweise auch algorithmisch adaptiert werden, um die Messrate an dynamische Durchflussbedingungen anzupassen. Hierbei können beispielsweise die Häufigkeit von Durchflussereignissen und/oder der Zeitpunkt von Durchflussereignissen und/oder deren zeitlicher Verlauf und/oder der zeitliche Abstand von, vorzugsweise benachbarten, Durchflussereignissen als Eingangsgrößen (Daten) für einen Algorithmus verwendet werden. Der beispielsweise in Fig. 7 gewählte Algorithmus führt zu einer Anpassung der Messrate über einen bestimmten Zeitbereich. Je nach Häufigkeit der Durchflussereignisse sowie deren zeitlicher Verlauf kann ein unterschiedlicher Algorithmus verwendet werden. Bei der Algorithmus-basierten Anpassung der Messrate kann beispielsweise auch das Zeitintervall der Messratenanpassung verändert werden. Die Adaption der Messrate kann, wie in Fig. 7 dargestellt, lediglich über einen gewissen Zeitraum (t1-t3) erfolgen.

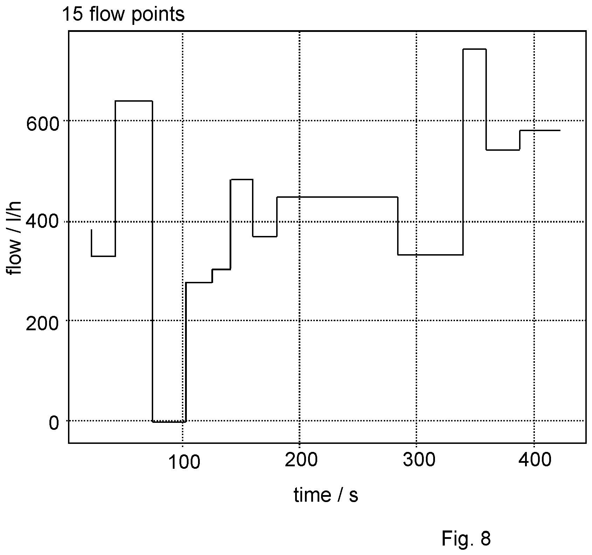

Fig. 8 zeigt ein Durchfluss/Zeit-Diagramm, bei der dynamische Durchflussbedingungen vorherrschen.

Dieses Beispiel des Durchfluss/Zeit-Diagramms umfasst 15 Durchflusspunkte (Flow Points). Die vorliegende Erfindung ermöglicht es, derartige dynamische Durchflussbedingungen hinsichtlich der durchzuführenden Durchflussmessungen erheblich genauer abzubilden als dies bisher möglich war.

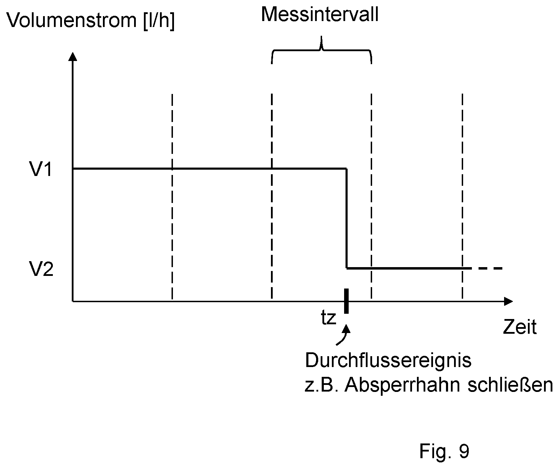

Alternativ oder zusätzlich ist erfindungsgemäß vorgesehen, auch die zeitliche Information (Zeitpunkt tz in Fig. 9), zu der ein Durchflussereignis stattgefunden hat, zu nutzen. Die Erfindung ermöglicht es, Ereignisse zu detektieren, die den Durchfluss im Messrohr bzw. Messrohrgehäuse 2 ändern. Bei einem Ultraschall-basierten Messverfahren werden die einzelnen Durchflussmessungen in einer zeitdiskreten Auflösung ausgeführt. Mit Hilfe der Erfindung kann somit auch ein genaueres Ergebnis des gezählten Volumens ermittelt werden, indem die detektierten Ereignisse bezüglich des Messintervalls zeitlich eingeordnet und anhand dieses Ereignisses interpoliert werden, wie die Fig. 9 dies schematisch vereinfacht darstellt. Es kann somit eine genauere Volumenakkumulation trotz sich ändernden Durchflüssen zwischen zwei Ultraschallmessungen erfolgen. Wird beispielsweise in einer Zeitdauer (z.B. einmal pro Sekunde) per Ultraschallmessung der aktuelle Durchfluss erfasst und es geschieht eine Durchflussänderung innerhalb dieser Zeitdauer, kann durch die vorliegende Erfindung eingeordnet werden, wann innerhalb der Zeitdauer der Durchfluss geändert wurde. Diese Information lässt sich dann für eine präzisere Volumenakkumulation nutzen, ohne dazu überhaupt eine zusätzliche Ultraschallmessung durchführen zu müssen. Hierfür wird lediglich der ermittelte Volumenstrom V1 bzw. V2 vor sowie nach der Durchflussänderung sowie der Zeitpunkt tz der Durchflussänderung benötigt.

Die Erfindung ermöglicht es, einerseits dynamische Durchflussbedingungen erheblich genauer abzubilden als dies bisher möglich war. Zum anderen kann die Messrate zu Zeiten statischer Durchflussbedingungen im Vergleich zu bisherigen Verfahren sogar reduziert werden, wodurch keine zusätzliche energetische Belastung der Batterie verursacht wird. Die Erfindung ermöglicht es deshalb, durch die Anpassung der Messrate sogar Energie zu sparen.

Des Weiteren kann durch zeitpunktgenaue Erfassung eines Durchflussereignisses eine genauere Durchflusserfassung innerhalb eines Messintervalls erreicht werden. Die Erfindung stellt daher einen ganz besonderen Beitrag auf dem einschlägigen Gebiet dar.

BEZUGSZEICHENLISTE

| | |
|---|---|
| 1 | Ultraschall-Fluidzähler |
| 2 | Messrohrgehäuse |
| 3 | Fluidleitungsnetz |
| 4 | Ultraschallwandler |
| 5 | Reflektor |

6 Messstrecke
7 Elektronikmodul
8 Mikroprozessor
9 Speicher
10 Batterie
11 Datenschnittstelle
12 Display
13 Platine
14 Auswertung
15 Verstärker
16 Filter
17 Vergleichskomparator
18 Head-End

**Patentansprüche**

1. Verfahren zum Betrieb eines Ultraschall-Fluidzählers (1), vorzugsweise eines Ultraschall-Wasserzählers, in einem Fluidleitungsnetz, mit einer ein Messintervall umfassenden Messrate, bei der zu bestimmten Zeitpunkten von einem Ultraschallwandler (4) ein Ultraschallsignal erzeugt wird und eine Messstrecke (6) durchläuft und von einer Auswerteelektronik auf Basis der Laufzeit und/oder eines Laufzeitunterschieds der Ultraschallsignale das Durchflussvolumen an Fluid ermittelt wird, **wobei**

    eine durch ein Durchflussereignis auf den Ultraschallwandler (4) über das Fluid ausgeübte hydraulische Kraft oder hydraulische Kraftänderung vom Ultraschallwandler (4) detektiert, in der Auswerteelektronik ausgewertet und als Folge davon
    die Messrate für die Ermittlung des Durchflussvolumens an Fluid adaptiv verändert wird und/oder
    das über ein Messintervall ermittelte Durchflussvolumen auf Basis der zeitlichen Lage des Durchflussereignisses in Relation zum Messintervall korrigiert wird.

2. Verfahren nach Anspruch 1, **dadurch gekennzeichnet, dass**
    eine durch das Durchflussereignis am Ultraschallwandler (4) über das Fluid ausgeübte hydraulische Kraft oder hydraulische Kraftänderung als sich am Ultraschallwandler (4) einstellende elektrische Spannung bzw. als sich am Ultraschallwandler (4) einstellende Änderung der elektrischen Spannung detektiert wird.

3. Verfahren nach Anspruch 2, **dadurch gekennzeichnet, dass** die Richtung der Kraftänderung festgestellt wird, indem detektiert wird, ob die sich am Ultraschallwandler (4) einstellende Änderung der elektrischen Spannung positiv oder negativ ist, und/oder **dadurch gekennzeichnet, dass** der Spannungsverlauf über der Zeit ausgewertet wird.

4. Verfahren nach Anspruch 3, **dadurch gekennzeichnet, dass** die Auswerteelektronik des Ultraschall-Fluidzählers abhängig von der Kraftänderung, vorzugsweise von der festgestellten Richtung der Kraftänderung, parametrisiert wird.

5. Verfahren nach den vorhergehenden Ansprüchen, **dadurch gekennzeichnet, dass** es sich bei dem Durchflussereignis um die Betätigung eines Absperrhahns und/oder eines Ventils, vorzugsweise um das vollständige oder teilweise Schließen oder um das vollständige oder teilweise Öffnen eines Absperrhahns und/oder Ventils, und/oder um eine Pumpenaktivität handelt.

6. Verfahren nach den vorhergehenden Ansprüchen, **dadurch gekennzeichnet, dass** eine hydraulische Kraft oder hydraulische Kraftänderung jeweils als Vergleichswert vorzugsweise in dem Ultraschall-Fluidzähler oder Ultraschall-Fluidzähler-zugeordnet, vorzugsweise in einem Head-End (18), hinterlegt ist und von der Auswerteelektronik mit während des Betriebs des Ultraschall-Fluidzählers generierten Messwerten verglichen wird.

7. Verfahren nach den vorhergehenden Ansprüchen, **dadurch gekennzeichnet, dass** eine erste sowie eine zweite Messrate (F1 bzw. F2) vorgegeben sind, wobei bei der zweiten Messrate (F2) das Messintervall größer ist als bei der ersten Messrate (F1) und abhängig von der detektierten hydraulischen Kraft oder hydraulischen Kraftänderung eine Umschaltung von der ersten auf die zweite Messrate (F1 bzw. F2) oder umgekehrt erfolgt, wobei insbesondere vorgesehen ist, dass die zweite Messrate (F2) mindestens um einen Faktor 2 größer ist die erste Messrate (F1).

8. Verfahren nach einem der vorhergehenden Ansprüchen, **dadurch gekennzeichnet, dass** nach der Detektion eines Durchflussereignisses eine dritte Messrate (F3) vorgesehen ist, wobei insbesondere vorgesehen ist, dass die dritte Messrate (F3) höher ist als die erste Messrate (F1) und/oder die zweite Messrate (F2).

9. Verfahren nach Anspruch 8, **dadurch gekennzeichnet, dass** nach den Messungen mit der dritten Messrate (F3) in Abhängigkeit von der detektierten hydraulischen Kraft oder hydraulischen Kraftänderung eine Umschaltung auf die erste Messrate (F1) oder auf die zweite Messrate (F2) erfolgt.

10. Verfahren nach den vorhergehenden Ansprüchen, **dadurch gekennzeichnet, dass** im Rahmen der adaptiven Änderung der Messrate für die Ermittlung des Durchflussvolumens an Fluid das Messintervall algorithmisch adaptiert wird.

**11.** Verfahren nach den vorhergehenden Ansprüchen, **dadurch gekennzeichnet, dass**

die Häufigkeit von Durchflussereignissen und/oder
der Zeitpunkt von Durchflussereignissen und/oder
der zeitliche Verlauf von Durchflussereignissen und/oder
der zeitliche Abstand von, vorzugsweise benachbarten, Durchflussereignissen erfasst werden.

**12.** Verfahren nach den vorhergehenden Ansprüchen, **dadurch gekennzeichnet, dass** das Durchflussvolumen zwischen den Messungen interpoliert wird, wobei insbesondere vorgesehen ist, dass die Interpolation in Abhängigkeit der zeitlichen Lage des Durchflussereignisses innerhalb des Messintervalls erfolgt.

**13.** Verfahren nach den vorhergehenden Ansprüchen, **dadurch gekennzeichnet, dass** bei der Festlegung der Veränderung der Messrate die noch vorhandene Restkapazität der Batterie (10) des Ultraschall-Fluidzählers (1) mitberücksichtigt wird, vorzugsweise dergestalt, dass der Ultraschall-Fluidzähler (1) mit der veränderten Messrate noch bis zu einer fest vorgegebenen Gesamtbetriebsdauer weiterbetrieben werden kann.

**14.** Ultraschall-Fluidzähler (1), vorzugsweise Ultraschall-Wasserzähler, für die Installation in einem Fluidleitungsnetz (3) umfassend

ein Messrohrgehäuse (2),
mindestens einen Ultraschallwandler (4) zum Aussenden und/oder zum Empfang eines Ultraschallsignals, welches entlang einer Messstrecke (6) läuft,
ein Elektronikmodul (7), welches eine Steuerungs- und Auswerteelektronik zur Steuerung des Betriebs sowie zur Auswertung des empfangenen Ultraschallsignals beinhaltet,
eine Batterie (10), sowie
eine Datenschnittstelle zum Datenexport, **dadurch gekennzeichnet, dass**
der Ultraschall-Fluidzähler (1) nach einem Verfahren gemäß den vorhergehenden Ansprüchen betrieben wird.

**Claims**

**1.** Method for operating an ultrasonic fluid meter (1), preferably an ultrasonic water meter, in a fluid line network with a measurement rate comprising a measurement interval, wherein an ultrasound signal is generated at particular instants by an ultrasound transducer (4) and travels along a measurement section (6), and the flow volume of fluid is ascertained by evaluation electronics on the basis of the time of flight and/or a time of flight difference of the ultrasound signals, wherein

a hydraulic force or hydraulic force change exerted by a flow event on the ultrasound transducer (4) via the fluid is detected by the ultrasound transducer (4), evaluated in the evaluation electronics and, as a function thereof, the measurement rate for ascertaining the flow volume of fluid is adaptively modified and/or
the flow volume ascertained over a measurement interval is corrected on the basis of the temporal location of the flow event in relation to the measurement interval.

**2.** Method according to Claim 1, **characterized in that** a hydraulic force or hydraulic force change exerted by the flow event on the ultrasound transducer (4) via the fluid is detected as an electrical voltage occurring at the ultrasound transducer (4) or as an electrical voltage change occurring at the ultrasound transducer (4).

**3.** Method according to Claim 2, **characterized in that** the direction of the force change is established by detecting whether the electrical voltage change occurring at the ultrasound transducer (4) is positive or negative, and/or **characterized in that** the voltage profile as a function of time is evaluated.

**4.** Method according to Claim 3, **characterized in that** the evaluation electronics of the ultrasonic fluid meter are parametrized as a function of the force change, preferably as a function of the established direction of the force change.

**5.** Method according to the preceding claims, **characterized in that** the flow event is the actuation of a stopcock and/or of a valve, preferably the full or partial closure or full or partial opening of a stopcock and/or valve, and/or a pump activity.

**6.** Method according to the preceding claims, **characterized in that** a hydraulic force or hydraulic force change is respectively stored as a comparative value, preferably in the ultrasonic fluid meter or assigned to the ultrasonic fluid meter, preferably in a head end (18), and is compared by the evaluation electronics with measurement values generated during operation of the ultrasonic fluid meter.

**7.** Method according to the preceding claims, **characterized in that** a first and a second measurement rate (F1 and F2, respectively) are predefined, the measurement interval for the second measurement rate (F2) being greater than for the first measurement rate (F1), and switching from the first to the second measurement rate (F1 and F2, respectively) or vice versa taking place as a function of the detected hydraulic force or hydraulic force change, provision being made in particular for the second measurement rate (F2) to be greater than the first measurement rate (F1) at least by a factor of 2.

8. Method according to one of the preceding claims, **characterized in that** a third measurement rate (F3) is provided after the detection of a flow event, provision being made in particular for the third measurement rate (F3) to be higher than the first measurement rate (F1) and/or the second measurement rate (F2).

9. Method according to Claim 8, **characterized in that** switching to the first measurement rate (F1) or to the second measurement rate (F2) takes place after the measurements with the third measurement rate (F3) as a function of the detected hydraulic force or hydraulic force change.

10. Method according to the preceding claims, **characterized in that** the measurement interval is adapted algorithmically in the scope of the adaptive change of the measurement rate for ascertaining the flow volume of fluid.

11. Method according to the preceding claims, **characterized in that**

> the frequency of flow events and/or
> the instant of flow events and/or
> the time profile of flow events and/or
> the temporal spacing of preferably neighbouring flow events are recorded.

12. Method according to the preceding claims, **characterized in that** the flow volume is interpolated between the measurements, provision being made in particular for the interpolation to take place as a function of the temporal location of the flow event within the measurement interval.

13. Method according to the preceding claims, **characterized in that** the remaining residual capacity of the battery (10) of the ultrasonic fluid meter (1) is jointly taken into account when establishing the modification of the measurement rate, preferably in such a way that the ultrasonic fluid meter (1) can still continue to be operated with the modified measurement rate until a rigidly predefined total operating duration.

14. Ultrasonic fluid meter (1), preferably ultrasonic water meter, for installation in a fluid line network (3), comprising

> a measurement tube housing (2),
> at least one ultrasound transducer (4) for emitting and/or receiving an ultrasound signal, which travels along a measurement section (6),
> an electronics module (7), which contains control and evaluation electronics for controlling the operation and for evaluating the received ultrasound signal,
> a battery (10), and
> a data interface for data export, **characterized in that** the ultrasonic fluid meter (1) is operated by a method according to the preceding claims.

**Revendications**

1. Procédé de fonctionnement d'un appareil de mesure de fluide à ultrasons (1), de préférence un appareil de mesure d'eau à ultrasons, dans un réseau de conduites de fluides, à une vitesse de mesure à un intervalle de mesure, dans lequel un signal ultrasonore est généré à des instants spécifiques par un convertisseur à ultrasons (4) et traverse une section de mesure (6) et le débit de fluide est déterminé par une unité d'analyse électronique sur la base du temps de propagation et/ou d'une différence de temps de propagation des signaux ultrasonores, dans lequel

> une force hydraulique ou une variation de force hydraulique exercée par un événement d'écoulement sur le convertisseur à ultrasons (4) par l'intermédiaire du fluide est détectée par le convertisseur à ultrasons (4), est évaluée dans l'unité d'analyse électronique, et en conséquence
> la vitesse de mesure est modifiée de manière adaptative pour déterminer le débit de fluide et/ou
> le débit de fluide déterminé au cours d'un intervalle de mesure est corrigé sur la base de la position temporelle de l'événement d'écoulement par rapport à l'intervalle de mesure.

2. Procédé selon la revendication 1, **caractérisé en ce que**
une force hydraulique ou une variation de force hydraulique exercée par l'événement d'écoulement sur le convertisseur à ultrasons (4) par l'intermédiaire du fluide est détectée sous la forme d'une tension électrique s'établissant sur le convertisseur à ultrasons (4) ou sous la forme d'une variation de la tension électrique s'établissant sur le convertisseur à ultrasons (4).

3. Procédé selon la revendication 2, **caractérisé en ce**

**que** la direction de la variation de force est déterminée en détectant si la variation de la tension électrique s'établissant sur le convertisseur à ultrasons (4) est positive ou négative, et/ou **en ce que** le profil de tension en fonction du temps est évalué.

4. Procédé selon la revendication 3, **caractérisé en ce que** l'unité d'analyse électronique de l'appareil de mesure de fluide à ultrasons est paramétrée en fonction de la variation de force, de préférence de la direction déterminée de la variation de force.

5. Procédé selon les revendications précédentes, **caractérisé en ce que** l'événement d'écoulement est l'actionnement d'un robinet d'arrêt et/ou d'une vanne, de préférence la fermeture complète ou partielle ou l'ouverture complète ou partielle d'un robinet d'arrêt et/ou d'une vanne, et/ou une activité de pompe.

6. Procédé selon les revendications précédentes, **caractérisé en ce qu'**une force hydraulique ou une variation de force hydraulique est respectivement stockée sous forme de valeur de comparaison, de préférence dans l'appareil de mesure de fluide à ultrasons ou associée à l'appareil de mesure de fluide à ultrasons, de préférence dans une tête de réseau (18), et est comparée par l'unité d'analyse électronique à des valeurs de mesure générées pendant le fonctionnement de l'appareil de mesure de fluide à ultrasons.

7. Procédé selon les revendications précédentes, **caractérisé en ce qu'**une première ainsi qu'une deuxième vitesse de mesure (F1 ou F2) sont prédéfinies, l'intervalle de mesure pour la vitesse de mesure (F2) étant plus grand que pour la première vitesse de mesure (F1), et un basculement de la première à la deuxième vitesse de mesure (F1 ou F2) ou inversement étant effectué en fonction de la force hydraulique ou de la variation de force hydraulique détectée, étant notamment prévu que la deuxième vitesse de mesure (F2) est supérieure à la première vitesse de mesure (F1) d'au moins un facteur 2.

8. Procédé selon l'une des revendications précédentes, **caractérisé en ce qu'**une troisième vitesse de mesure (F3) est prévue après la détection d'un événement d'écoulement, étant notamment prévu que la troisième vitesse de mesure (F3) est supérieure à la première vitesse de mesure (F1) et/ou à la deuxième vitesse de mesure (F2).

9. Procédé selon la revendication 8, **caractérisé en ce qu'**un basculement vers la première vitesse de mesure (F1) ou vers la deuxième vitesse de mesure (F2) est effectué après les mesures à la troisième vitesse de mesure (F3) en fonction de la force hydraulique ou de la variation de force hydraulique détectée.

10. Procédé selon les revendications précédentes, **caractérisé en ce que** l'intervalle de mesure est adapté de manière algorithmique dans le cadre de la modification adaptative de la vitesse de mesure pour déterminer le débit de fluide.

11. Procédé selon les revendications précédentes, **caractérisé en ce que**

la fréquence des événements d'écoulement et/ou
l'instant des événements d'écoulement et/ou
le profil temporel des événements d'écoulement et/ou
l'intervalle de temps entre des événements d'écoulement, de préférence adjacents, sont enregistrés.

12. Procédé selon les revendications précédentes, **caractérisé en ce que** le débit de fluide est interpolé entre les mesures, étant notamment prévu que l'interpolation est effectuée en fonction de la position temporelle de l'événement d'écoulement à l'intérieur de l'intervalle de mesure.

13. Procédé selon les revendications précédentes, **caractérisé en ce que** la capacité restante de la batterie (10) de l'appareil de mesure de fluide à ultrasons (1) est prise en compte lors de l'établissement de la modification de la vitesse de mesure, de préférence de telle manière que l'appareil de mesure de fluide à ultrasons (1) puisse continuer à fonctionner à la vitesse de mesure modifiée jusqu'à une durée de fonctionnement totale prédéfinie.

14. Appareil de mesure de fluide à ultrasons (1), de préférence un appareil de mesure d'eau à ultrasons, pour l'installation dans un réseau de conduites de fluides (3), comprenant

un boîtier de tube de mesure (2),
au moins un convertisseur à ultrasons (4) pour l'émission et/ou la réception d'un signal ultrasonore, lequel se propage le long d'une section de mesure (6),
un module électronique (7), lequel contient une électronique de commande et d'évaluation pour commander le fonctionnement et pour évaluer le signal ultrasonore reçu,
une batterie (10), ainsi
qu'une interface de données pour l'exportation de données, **caractérisé en ce que**
l'appareil de mesure de fluide à ultrasons (1) est utilisé conformément à un procédé selon l'une des revendications précédentes.

7    1

4    N

3

5    2

6

Fig. 1

11    12

10    13

7

8

9

4

Fig. 2

Fig. 3

Piezosignal über Zeit

Fig. 4

Fig. 5

Fig. 6

Fig. 7

Fig. 8

Fig. 9

**EP 4 430 364 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3199932 A1

- DE 102012022376